# EUROPEAN PATENT APPLICATION

(11) **EP 2 933 148 A1**
(43) Date of publication of application: **21.10.2015**
(21) Application number: 15163522.4
(22) Date of filing: 14.04.2015
(51) Int. Cl.: B60R 13/10

(54) **LATCHING FRAME FOR A SIGN**

(30) Priority: 14.04.2014 GB 201406633
(71) Applicant: SIGNAM LIMITED, Warwick, CV34 5FY (GB)
(72) Inventor: Gray, Derick, Warwick, Warwickshire CV34 5FY (GB)
(74) Representative: Dempster, Benjamin John Naftel

(57) **Abstract**

A number plate frame (10) grips a number plate (13) by the edge, and is snapped closed. A release mechanism (61) is beneath the face of the number plate, and can be accessed only by destroying the plate, for example by cutting a hole therethrough.

The invention provides a secure means of retaining a number plate without obscuring the face thereof, and ensures readability by automatic number plate recognition systems.

## Description

### TECHNICAL FIELD

This invention relates to a latching frame for a sign, and in particular to a frame for securely retaining a sign, such as number plate of a vehicle.

### BACKGROUND TO THE INVENTION

Legislation requires that some kinds of sign are provided in a prescribed format. Number plates of vehicles are one such sign. The format was originally prescribed for reasons of uniformity and ease of recognition, but more recently has become particularly useful in conjunction with automatic reading and recognition systems.

In relation to vehicle number plates, automatic reading and recognition systems are useful, for example, in detecting speeding of vehicles, parking infringements, theft from fuel stations and tracking progress of a vehicle on the road network. Such systems are effective and efficient, and as a result some vehicle owners have used false or stolen number plates to disguise the true identify of a vehicle.

It has been proposed to address the problem of false number plates by providing that number plates are available only from authorized suppliers on production of appropriate identity documents, such as the vehicle registration document and personal proof of identify of the vehicle owner.

Theft of number plates has been addressed by, for example, the use of security attachments such as threaded fasteners which cannot be unscrewed. However the use of such attachments is not widespread, and they have other disadvantages which will be apparent from the following description.

A secondary difficulty with existing number plates is due to the method of construction. Typically a number plate is a laminate comprising a clear outer sheet, for example an acrylic sheet having a thickness of around 3-4mm, and a backing sheet on which is printed the vehicle registration number. Various kinds of laminated number plates have been proposed, but delamination from the edge or from a hole of a fixing screw is a common problem, typically due to ingress of moisture. Delamination is unsightly, and may cause the vehicle to fail a periodic test of fitness for use. Delamination may also render a number plate unreadable by an automatic recognition system.

Automatic recognition systems rely upon a clear presentation of the registration number in the prescribed format. Any non-prescribed feature, such as a screw fixing in the wrong place, may confuse the recognition system so that the number is not recognized or a wrong number is identified.

This aspect is increasingly important as automatic recognition systems are required for open road tolling, where 100% readability of number plates is essential to collect toll fees.

What is required is a secure fixing for a vehicle number plate, which prevents removal of an undamaged number plate, and which avoids the use of through fixings such as screws. Such a secure fixing may also be useful for other signs having similar qualities.

### SUMMARY OF THE INVENTION

According to the invention there is provided a frame for retaining a sign about the perimeter thereof, said frame comprising first and second elements relatively movable from an open condition permitting insertion of a sign therein to a closed condition in which the sign is in use retained, said frame further including a latch operable on relative movement of the first and second elements to maintain the closed condition, said latch being beneath said sign in use.

A frame according to the invention is snapped shut to retain a planar sign, the latch being inaccessible since it is beneath the sign. To gain access to the latch the sign must be removed but this is not possible without destruction thereof because the sign is retained by the fame when in the closed condition.

Thus the invention provides a solution to the problem of number plate theft, and to unauthorized removal of any sign which is in a planar form.

In an embodiment of the invention the latch is releasable, but only after cutting through the sign for access thereto. In one embodiment such cutting, for example by 40mm hole, allows removal of a keeper, which in turn permits the latch to be released. However, the hole is sufficient to render the sign unusable. Accordingly legitimate replacement of a sign is facilitated, thus permitting re-use of the frame, for example when assigning a different registration number to a vehicle.

In a practical embodiment the frame of the invention is attached to a substrate, for example a motor vehicle, by suitable screw fastenings passing therethrough. Such fasteners may be in any position provided by a vehicle manufacturer, since in use they are also beneath a number plate retained in the frame. Accordingly the invention obstructs removal of a frame together with a sign, since the fixings are revealed only upon removal of the sign.

In an embodiment of the invention each element includes a lip to overlap the perimeter of the sign in the closed condition, the lip of each element is continuous and the lips meet in the closed condition so that the perimeter of the sign is completely hidden. This arrangement obstructs the use of a pry bar or the like to lever the sign from the frame.

For an oblong sign, the lips may be substantially equal in length and form, and are 'U' shaped to meet on a mid-line of the frame.

Alternatively the lips may be 'L' shaped and meet at opposite corners; this configuration may be more suitable for substantially square signs.

Continuous lips also have the advantage of protecting the perimeter of the sign from moisture and the like, and thus from delamination. The lips may include a soft inset seal if desired. The lips define a peripheral rim to the sign, which can be of uniform width and, for example, meet the legislative requirements for number plates in the United Kingdom.

The face of the sign is clear of fixings and the like because retention is by holding the perimeter thereof. Accordingly through holes are not required, and the problem of obtaining the correct hole position is obviated; the further risk of delamination is also obviated. By removing the requirement for face fixings, the sign is also better able to be distinguished by recognition systems, in particular registration number recognition systems.

In an embodiment of the invention the frame is moulded of a suitable plastic such as polypropylene, and may thus be curved in the manner of a planar sign, to conform to a curved substrate, such as a vehicle front or rear panel.

In an embodiment of the invention the lip substantially tapers to the edge on the inside face, so as to be adapted to grip a sign with a bevelled edge. Alternatively the lip may define a somewhat rectangular recess for a sign having an orthogonal edge.

A particular feature of the invention is that the frame can be attached in the open condition to a substrate such as a vehicle, so that the sign, such as a number plate, can be attached by unskilled personnel by closing the frame. This arrangement facilitates preparation of a vehicle for sale in circumstances where the registration number is not assigned until after sale is completed.

The invention has applicability to planar signs of all shapes and sizes, including curved perimeters provided that the lips can engage the perimeter in the closed condition.

### BRIEF DESCRIPTION OF DRAWINGS

Other features of the invention will be apparent from the appended claims and from the following description of a preferred embodiment shown by way of example only in the accompanying drawings, in which:-
Fig. 1 is a front view of a frame according to the invention, with a vehicle registration plate inserted therein.
Fig. 2 is a front view of an upper frame of Fig. 1.
Fig. 3 is a front view of a lower frame of Fig. 1.
Fig. 4 is a view of the upper and lower frames in a coupled condition.
Fig. 5 corresponds to Fig. 4 and shows additionally a locking ring.

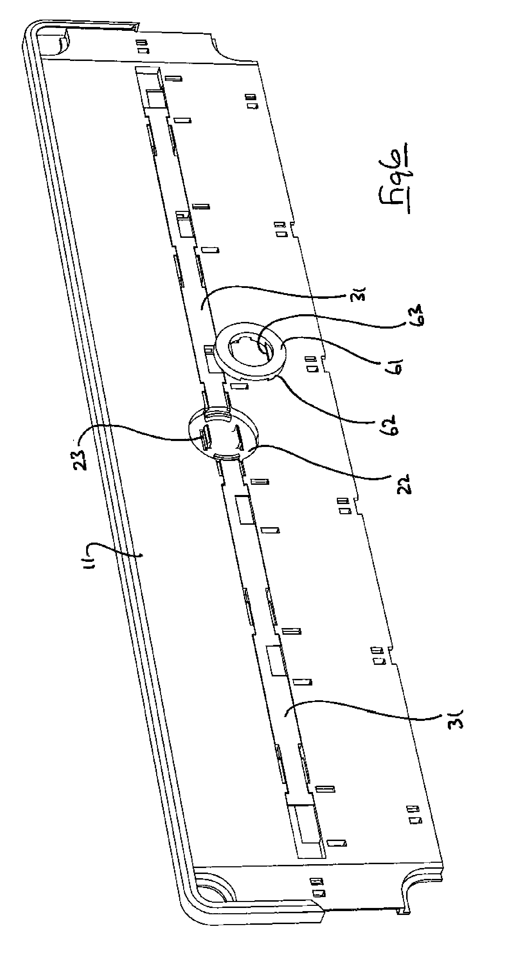

Fig. 6 corresponding to Fig. 2, and shows the locking ring separated from the upper frame member.
Fig. 7 is a view of the underside of a locking key for use in the invention.
Fig. 8 corresponds to Fig. 5 and shows the frames initially engaged.
Fig. 9 corresponds to Fig. 1, and shows the closed condition of the frame, but without a registration plate.
Figs. 10-12 are part sections illustrating latching and unlatching of the upper and lower frames.

### DESCRIPTION OF AN EMBODIMENT OF THE INVENTION

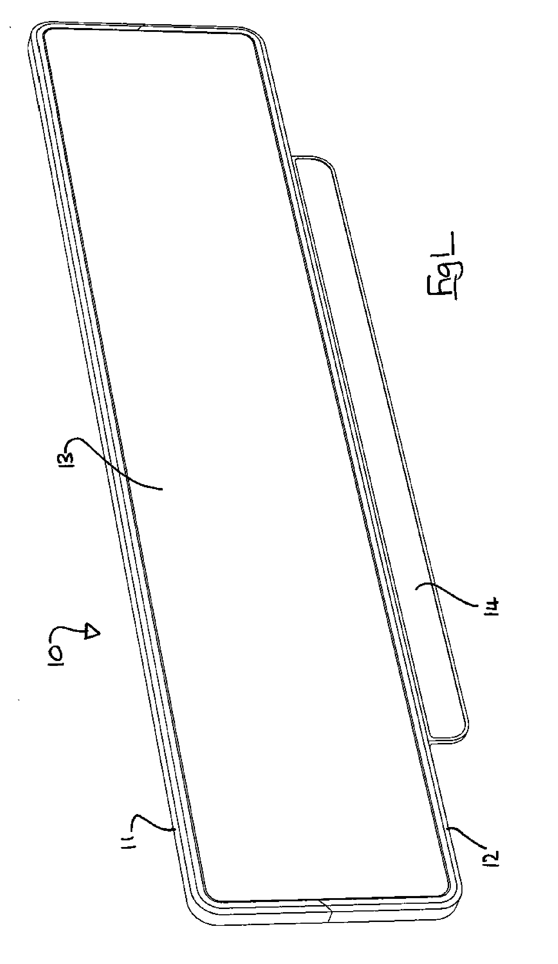

With reference to the drawings, Fig. 1 illustrates a front perspective view of a frame 10 according to the invention, and consisting of an upper frame 11 and a lower frame 12. A peripheral edge of the frame defines a continuous recess in which the perimeter of a number plate 13 is received in use. The perimeter is completely housed within the recess, and consequently cannot be seen when the frame is closed.

A lower frame extension 14 is optional, and may comprise a display surface for the name of a car supplier or other information. The lower extension is for example clipped to the lower frame 12.

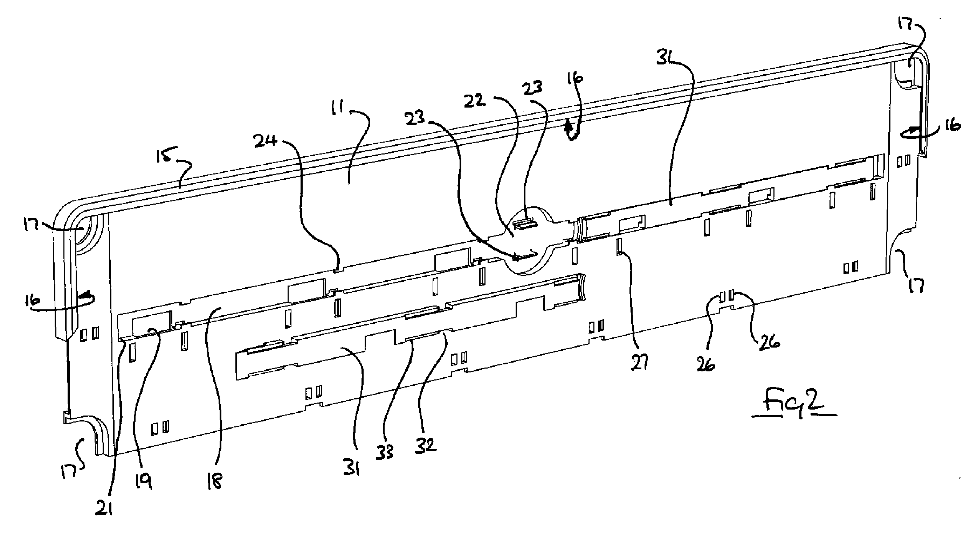

Fig. 2 illustrates the upper frame 11 from the front. The upper frame comprises a one-piece plastic moulding having a 'U' shaped rim 15 which defines a recess 16 adapted to the shape of the edge of a number plate; the recess may for example be rectangular or wedge shaped.

Through quadrants 17 are provided at each corner to receive fixings, as will be explained below. The upper quadrants are closed by the rim 15, whereas the lower quadrants are open (in the absence of a rim).

A rectangular section channel 18 is defined on the horizontal mid-line and has a plurality of equi-spaced through apertures 19 facing rearwardly, and downwardly through a lower side wall 21. The centre of the channel 19 opens into a circular recess 22 which has upstanding integral hooks 23 disposed generally parallel to the axis of the channel 18, and on either side thereof.

The recess divides the channel 18 into left and right sides, and in each side is slidable a locking arm or key 31 of generally rectangular form. The upper and lower perimeter of the channel includes ribs 24 to define a sliding stroke for the respective key 31; in Fig. 2, the left key 31 is loose whereas the right key 31 is in the channel.

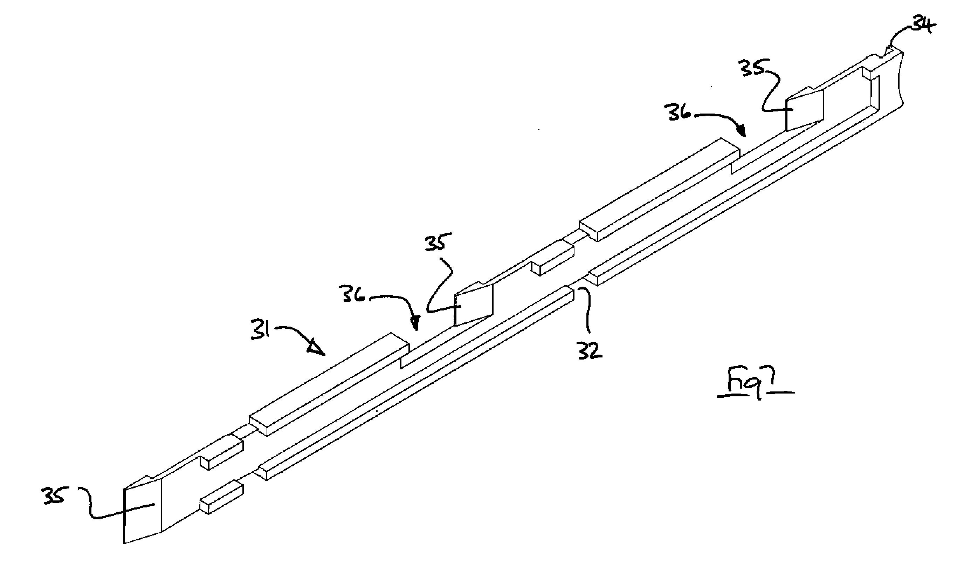

With additional reference to Fig. 7, each key 31 includes a slot 32 in the top and bottom faces for passage of respective nibs 24, and whereby each key 31 can be fully inserted into the channel. Joining each slot 32 is a recess 33 extending along the length of the front face of the key, and in which each rib 24 can travel on lengthwise movement of a key 31 with respect to the channel 18. Each rib 24, and each recess 33 is approximately half of the depth of the channel 18.

In use the ribs 24 and recesses 33 serve to both retain the keys 31 in the channel, and to control the stroke thereof along the channel, as will become apparent.

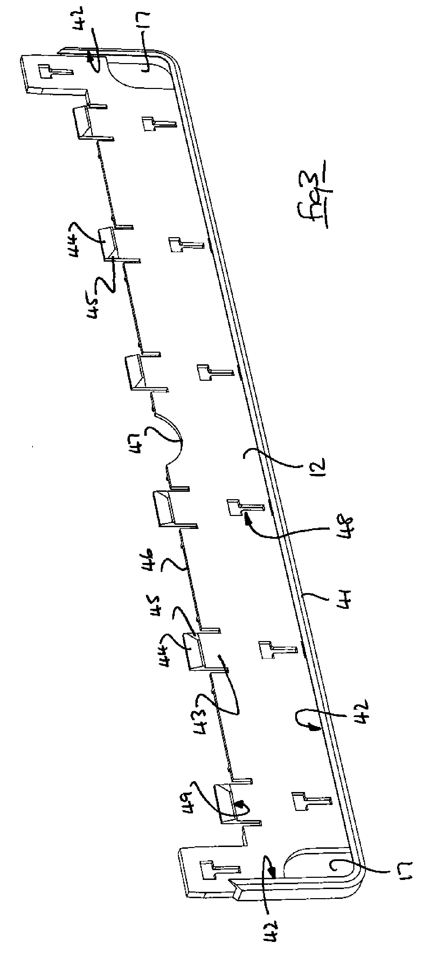

Fig. 3 illustrates the lower frame 12 from the front, and the through apertures which completely define the lower quadrants 17. A continuous 'U' shaped rim 41 defines a recess 42 corresponding to the shape and form of recess 16.

The lower frame includes a plurality of rectangular upwardly facing tongues 43 which in use pass through the apertures 19 to sit against the base of the channel 18. The tongues have a front taper 44 whereby a relatively narrow upper edge is created, and a side taper 45 facing towards the centre of the frame. An upper frame edge 46 is shaped to fit closely to the wall of the channel 18, and has a semi-circular centre portion 47 to clear the wall of the circular recess 22.

A plurality of tee slots 48 are provided across the face of the lower frame 12, for engagement by forks 26 of the upper frame 11; in use the forks enter the widened part of the respective tee slots, and engage as sliders behind the narrow part as the upper and lower frames are moved together. The tee slots 48 and forks 26 ensure that the upper and lower frames are retained in close engagement so as to give a substantially planar assembly.

The forks 26 constitute an enlarged head, behind which a throat engages the tee slot.

The torques have slits 49 extending on either side into the body of the lower frame, so as to give some bending resilience. In use the slits are engaged by respective backwardly projecting legs 27 of the upper frame 11.

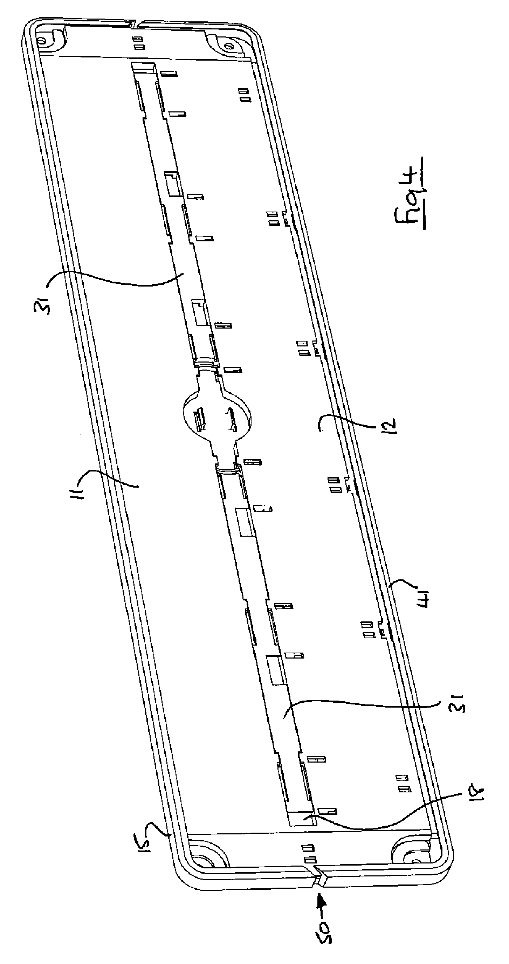

An initial assembly of the upper and lower frames 11, 12, which each comprise integral mouldings, is illustrated in Fig. 4. Keys 31 are engaged in the channel 18 and urged respectively towards the ends thereof. The frame is in a semi-open condition, as indicated by a gap 50 between the rims 15, 41.

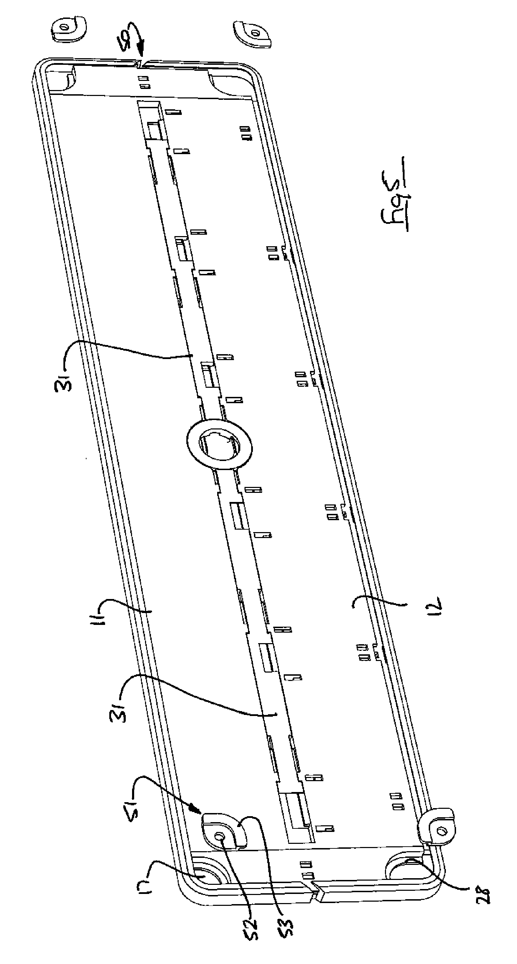

Fig. 5 shows a corresponding view with the keys 31 moved inwardly. Also illustrated are dog-leg corner pieces 51 each having a screw aperture 52 and insertable in a respective quadrant 17. Each quadrant has a peripheral projection 28 defining a stop for sliding engagement with a quarter rim 53 of each piece 51.

The corner pieces 51 are used to retain the frame 10 against a substrate, such as a car bumper or panel, and components are dimensioned so that a small amount of sliding motion in the plane of the frame 10 is permitted with respect to the corner pieces 51. This allows for relative expansion or contraction of components in hot or cold weather, which may otherwise cause bending or buckling of the frame on the substrate. If such relative movement is not required, the quadrants 17 may be solid, and have fixing holes formed directly therethrough.

Each inner end of the keys 31 includes a peg 34. A circular keeper 61 has a channelled underside defining a peripheral flange 62 which is engageable over the pegs 34, so that each ledge is housed within the channelled underside. In this condition the keys 31 are prevented from lateral movement in the channel. The inner rim of the keeper 61 defines upper and lower latch faces 63 for resilient engagement by the hooks 23, whereby the latch member can be retained in the circular recess 22.

The underside of a key 31 is shown in greater detail in Fig. 7. The slots 32 and peg 34 can be seen, but not the recesses 33. Ramp faces 35 are provided in the longitudinal direction for engagement with the tongues 43, as will be explained. The keys have a channelled underside to reduce material content and allow passage of neighbouring features.

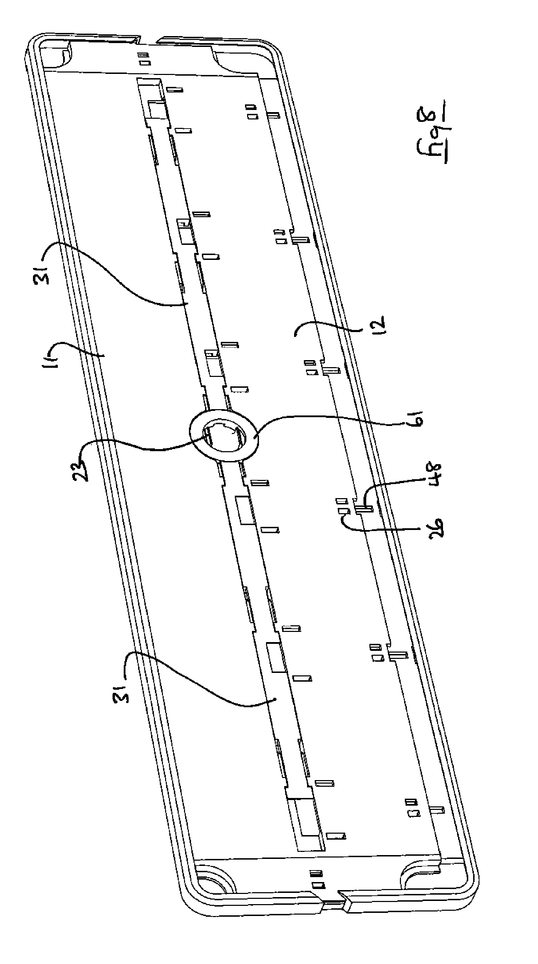

Fig. 8 illustrates an initial condition of the upper and lower frames 11, 12, in which they are fully apart, and in which the forks 26 and tee slots 48 are entered. The keys 31 are fully inward and retained in position by the circular latch member 61, which itself is retained by the hooks 23.

A 'ready' condition is illustrated in Fig. 5. The frames 11, 12 are closer together, but the clearance 50 is sufficient to permit entry of a registration plate. It will be understood that slight bending of the registration plate is required to enter the vertical parts of the rims 15, 41, but that the horizontal edges are unobstructed.

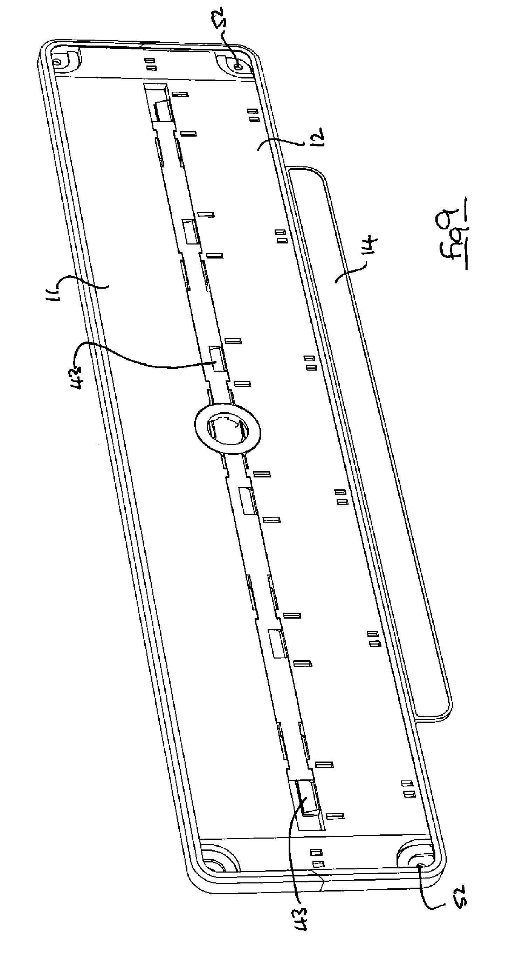

Fig. 9 illustrates a closed condition (corresponding to Fig. 1), but the registration plate is omitted so that the features of the frame can be seen. The tongues 43 are fully engaged through the corresponding apertures 19, and the clearance 50 is eliminated. In use fixing screws retain the frame via the screw apertures 52. Closure is obtained by simply pushing the upper and lower frames together, and retention is assured by an undercut 49 behind each front taper 44 of a tongue.

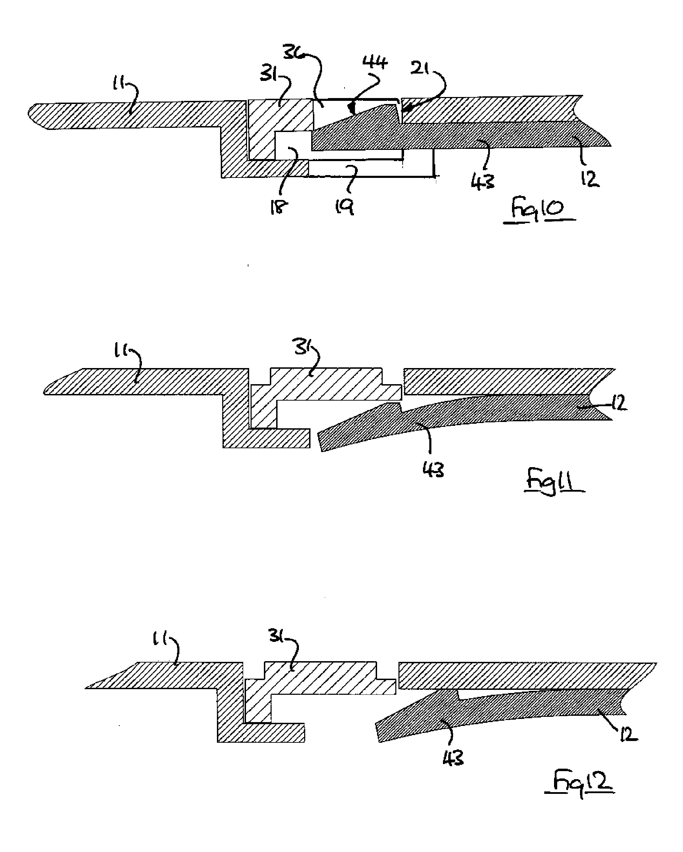

As illustrated in Fig. 10 each tongue 43 fully engages in the channel 18 and through a respective aperture 19 to latch behind the lower side wall 21. The keys include cutouts 36 to accommodate the tongues 43. In this condition the registration plate is retained and cannot be removed without breakage.

In order to remove a registration plate, a circular aperture is drilled through the centre thereof in register with the keeper 61. The aperture needs to be of sufficient diameter to permit the keeper to be removed therethrough, and may be formed by the annular serrated blade of a hole cutter driven by a hand held power drill.

On removal of the keeper 61, the pegs 34 are disengaged, and the keys 31 can be forced outwardly in the channel 18; the ramp faces 35 engage the side ramps 45 of the tongue to bend them downwardly, as illustrated in Fig. 11. In this condition the upper and lower frame parts 11, 12 may be pulled apart, as illustrated in Fig. 12 to permit complete removal of the registration plate. The frame members may then be returned to the condition of Fig. 5, ready for insertion of a new registration plate.

It will be understood that modifications to the invention may be made within the scope of the claims appended hereto.

## Claims

1. A frame for retaining a sign about the perimeter thereof, said frame comprising first and second elements relatively movable from an open condition permitting insertion of a sign therein to a closed condition in which the sign is in use retained, said frame further including a latch operable on relative movement of the first and second elements to maintain the closed condition, said latch being beneath said sign in use.

2. A frame according to claim 1 wherein said elements each comprise a lip to overlap the perimeter of said sign in the closed condition, optionally wherein each said lip is continuous, optionally wherein the lips meet in the closed condition.

3. A frame according to claim 2 wherein each said lip tapers to the edge from the inner side thereof.

4. A frame according to claim 1, claim 2 or claim 3 wherein said first and second elements are slidably connected.

5. A frame according to claim 4 wherein one of the first and second elements includes a male slider, and the other of the first and second elements includes an opening for co-operation with said male slider.

6. A frame according to claim 5 wherein said opening comprises a slot for guiding said male slider from the open to the closed condition, optionally wherein said male slider comprises a throat and an enlarged head, said throat engaging said slot, optionally wherein said slot includes a widening at one end thereof, said widening being sufficient to permit passage of said head therethrough, and further including a one-way catch adjacent said widening, said catch retaining said head on first entry of said throat into said slot.

7. A frame according to claim 6 and including a plurality of slots and male sliders in the lateral array, each slot being aligned with the sliding direction of said first and second elements.

8. A frame according to any preceding claim wherein one of said first and second elements includes a lateral array of ramps, the other of said first and second elements having an abutment facing each said ramp, and said frame further including a lateral key insertable between each ramp and respective abutment to urge said element to the open condition.

9. A frame according to claim 8 wherein said latch comprises said ramps.

10. A frame according to claim 8 or claim 9 wherein said key is reversibly movable on movement of the first and second elements to the closed condition.

11. A frame according to claim 10 wherein said key is slidable in a channel defined by one of the first and second elements, said channel extending orthogonally to the direction of relative movement of the first and second elements.

12. A frame according to claim 11 wherein said key is engageable by a keeper in the closed condition, optionally wherein said keeper is in the geometric centre of said frame when in the closed condition.

13. A frame according to claim 12 and having opposite keys each engageable by said keeper in the closed condition.

14. A frame according to claim 13 wherein said keeper comprises an annulus having a continuous channel in one face thereof, an outer wall of said channel being engageable with a peg of each said key; or wherein an inner wall of said channel includes a recess for snap-fitting engagement with an upstanding hook of one of said first and second elements, optionally wherein said annulus includes two opposite recesses for respective engagement with two said hooks.

15. A frame according to claim 14 wherein said first and second elements define a substantially planar face for contact with the underside of a sign in use, said keeper and keys being flush with said face in the open and closed conditions.

16. A frame according to any preceding claim and including through holes for fastening said frame to a substrate in use, said through holes having a recess to accommodate the head of a corresponding fastener, optionally the frame being rectangular, and wherein said through holes are defined in the four corners thereof, optionally including mounts within which said through holes are defined, said mounts being retained in use in said frame for relative sliding movement in the plane of said frame.

17. A method of installing a sign in a frame according to any of claims 1-16, the method comprising:
placing said frame in the open condition,
inserting said sign therein, and
moving said first and second elements to the closed condition whilst causing said latch to engage, optionally further including the step of removing said sign from said frame the method comprising cutting a hole in said sign to reveal said keeper, and disengaging said keeper to permit said first and second element to move to the open condition by lateral movement of said key.
